# EUROPÄISCHE PATENTANMELDUNG

(11) **EP 1 274 220 A2**
(43) Veröffentlichungstag der Anmeldung: **08.01.2003**
(21) Anmeldenummer: 02100746.3
(22) Anmeldetag: 25.06.2002
(51) Int. Cl.: H04M 3/523, H04M 3/51, H04M 7/00

(54) **Verfahren zur Rufbeantwortung in einem verteilten Kommunikationssystem**

(30) Priorität: 04.07.2001 DE 10132262
(71) Anmelder: SIEMENS AKTIENGESELLSCHAFT, 80333 München (DE)
(72) Erfinder: Rist, Claus, 44795, Bochum (DE); Roth, Roland, 45886, Gelsenkirchen (DE)

(57) **Zusammenfassung**

Die Erfindung beschreibt ein Verfahren zur Rufbeantwortung in einem aus mehreren Kommunikationseinrichtungen bestehenden, verteilten Kommunikationssystem (10) bei dem ein Teilnehmer an einem den Kommunikationseinrichtungen (12,14,16) des verteilten Kommunikationssystems (10) zugeordneten Kommunikationsendgeräten (50,52,54,56) registrierbar ist. Ankommende Rufe (64) werden dabei nach vorgebbaren Kriterien den Kommunikationsendgeräten (50,52,54,56) zugeordnet. Bei Nichtverfügbarkeit eines durch einen ankommenden Ruf (64) gerufenen Teilnehmers wird eine Ansagefunktion ausgeführt, durch die eine Aktivierung einer Ansage auf einer zentralen Kommunikationseinrichtung (27) des verteilten Kommunikationssystems (10) veranlasst wird.

## Beschreibung

Die Erfindung betrifft ein Verfahren zur Rufbeantwortung in einem verteilten Kommunikationssystem gemäß dem Oberbegriff des Patentanspruchs 1.

Ein verteiltes Kommunikationssystem besteht aus einem Verbund mehrerer Kommunikationseinrichtungen (z.B. vermittlungstechnische Einrichtungen wie Telekommunikationsanlagen oder auch Datenverarbeitungseinrichtungen). Ein derartiges verteiltes Kommunikationssystem besitzt üblicherweise eine oder mehrere Verbindungen zu öffentlichen Kommunikationsnetzen. Verbindungswünsche zu einem gerufenen Teilnehmers innerhalb des verteilten Kommunikationssystems werden anhand der gewählten Zielrufnummer des gerufenen Teilnehmers an seine zugehörigen Kommunikationseinrichtung vermittelt. Diese Kommunikationseinrichtung stellt eine Verbindung zu einem dem gerufenen Teilnehmer zugeordneten Endgerät her. Die Zuordnung des Teilnehmers zu seinem Endgerät erfolgt im allgemeinen durch eine dem jeweiligen gerufenen Teilnehmer zugehörige Zielrufnummer.

In modernen Kommunikationssystemen erfolgt die Zuordnung eines Teilnehmers zu einem Endgerät jedoch häufig nicht durch eine feste Zielrufnummer. Statt dessen meldet sich ein Teilnehmer an einem weitgehend beliebigen Kommunikationsendgerät, z.B. durch Eingabe einer Kennnummer, an um für ihn bestimmte Verbindungswünsche durchgestellt zu bekommen.

Dieses Verfahren erweist sich insbesondere vorteilhaft bei telephonischen Dienstleistungszentren, bei denen über eine gemeinsame Sammelrufnummer eine Gruppe von telephonischen Auftragsbearbeitern erreichbar ist. Das Auswahlkriterium, nach der ein eingehender Anruf durchgestellt wird, würde in einem solchen Fall beispielsweise die Verfügbarkeit eines jeweiligen Auftragsbearbeiters dieser Gruppe sein.

Kennzeichnend für die heutige Telekommunikation ist ein Zusammenwachsen von Telephonie- und Datenverarbeitungsfunktionen. Die Organisation ECMA (European Computer Manufacturer Association) arbeitet daher an Standards, die die Unterstützung von Telephoniefunktionen an einem Datenverarbeitungsarbeitsplatz ermöglichen. Aus dem ECMA-Standard ECMA-269, 4. Ausgabe, Juni 2000: "Services for Computer Supported Telecommunication Applications (CSTA) Phase III" ist beispielsweise eine Verfahren für eine automatische Rufverteilung, in der Fachwelt unter dem Kürzel ACD (Automatic Call Distribution) bekannt. Hierbei werden für "ACD Devices Categories", also physische (Geräte) oder logische (Softwareapplikationen) Telekommunikationseinheiten, charakteristische Eigenschaften definiert, die in Abschnitt 6.1.3.4.3 "ACD Device Categories" des genannten Standards beschrieben werden. Aktivitäten dieser Telekommunikationseinheiten untereinander werden durch "Agenten" (vgl. Abschnitt 6.1.3.7, "Agent") softwaretechnisch verwaltet, wobei ein Agent eine Telekommunikationseinheit repräsentiert, an die durch einen Anmeldeprozess ein Teilnehmer angemeldet wurde.

Eine Integration von Telekommunikationsfunktionen innerhalb von Datenverarbeitungsanlagen wird durch Programmierschnittstellen realisiert. Die bekanntesten Programmierschnittstellen dieser Art sind TSAPI (Telephony Service Application Programming Interface), TAPI (Telephony Application Programming Interface) und der CSTA-Standard ("Computer Supported Telecommunication Applications").

Nach dem CSTA-Standard werden im oben beschriebenen Fall eines telephonischen Dienstleistungszentrums Teilnehmer, deren Endgeräte einer Gruppe zugeordnet sind, nach einem erfolgten Anmeldungsprozess unter Verwendung einer Registrierfunktion durch einen Agenten repräsentiert. Ein eintreffender Verbindungswunsch wird unter Verwendung dieser Agenten unabhängig von der Zielrufnummer des jeweiligen Endgeräts nach vorgebbaren Kriterien verteilt. Die Registrierfunktion ist in Form einer Software realisiert, die beim Anmeldungsprozess z.B. durch Eingabe einer Kennzahl durch den sich anmeldenden Teilnehmer ausgeführt wird. Mit diesem Kennzeichen wird der sich anmeldende Teilnehmer einer Gruppe zugeordnet.

In der deutschen Patentanmeldung mit dem Aktenzeichen 10102174.7 wurde ein Verfahren vorgeschlagen, bei dem mehrere Kommunikationseinrichtungen des selben Kommunikationssystems in eine Rufverteilung einbezogen werden, wobei eine Gruppe mehrere Kommunikationseinrichtungen innerhalb des Kommunikationssystems umfassen kann.

In vielen Kommunikationssystemen ergibt sich die Notwendigkeit, eine automatisierte Anrufbeantwortungsfunktion vorzusehen. Bei den erwähnten telephonischen Dienstleistungszentren hat diese automatisierte Anrufbeantwortung z.B. die Funktion, einen rufenden Teilnehmer darauf hinzuweisen, dass er in eine Warteschlange eingereiht wurde und er mit dem nächsten freiwerdenden Bearbeiter verbunden wird. Eine automatisierte Anrufbeantwortung kann andererseits auch die Funktion haben, dem rufenden Teilnehmer einen Hinweis über den Aufenthaltsort eines nicht verfügbaren gerufenen Teilnehmers zu übermitteln und eventuell dem rufenden Teilnehmer die Möglichkeit zu geben, eine Sprachnachricht aufzuzeichnen.

Die Verwaltung und Einstellung der automatisierten Anrufbeantwortung kann von einem Teilnehmer an seinem Endgerät vorgenommen werden. Die Kommunikationseinrichtung, mit der das Endgerät dieses Teilnehmers verbunden ist, verwaltet somit die - eventuell teilnehmerindividuelle - Sprachnachricht bei einer Nichterreichbarkeit dieses Teilnehmers und speichert für ihn hinterlassene Sprachnachrichten. Enthält ein Kommunikationssystem einen aus mehreren Kommunikationseinrichtungen bestehenden Anlagenverbund, ergibt sich das Problem, dass ein Teilnehmer sich nach dem oben beschriebenen Verfahren der deutschen Patentanmeldungsschrift zwar an einem beliebigen Endgerät anmelden kann, wobei er nicht an eine ihm zugeordnete Kommunikationseinrichtung gebunden ist, er aber andererseits hinsichtlich der Verwaltung seiner teilnehmerindividuellen, automatisierten Anrufbeantwortung an seine ihm zugeordnete Kommunikationseinrichtung gebunden ist.

Der vorliegenden Erfindung liegt die Aufgabe zugrunde, ein Verfahren anzugeben, durch das eine kommunikationseinrichtungs-unabhängige Wahl eines Kommunikationsendgeräts bei gleichzeitiger teilnehmerindividuellen Anrufbeantwortungsfunktion ermöglicht wird.

Eine Lösung der Aufgabe erfolgt durch die Merkmale des Patentanspruchs 1.

Erfindungsgemäß wird bei Nichtverfügbarkeit eines Teilnehmers eine Ansagefunktion, die sich auf einer zentralen Kommunikationseinrichtung des verteilten Kommunikationssystems befindet, aktiviert.

Ein wesentlicher Vorteil des erfindungsgemäßen Verfahrens ist in der Lokalisierung der Ansage an einer zentralen Kommunikationseinrichtung zu sehen, womit eine einfache Verwaltung der Ansageninformationen sämtlicher Teilnehmer des verteilten Kommunikationssystems möglich ist.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen:
- Fig. 1:: ein Strukturbild zur schematischen Darstel-lung eines erfindungsgemäßen verteilten Kommunikationssystems; und
- Fig. 2A bis 2D:: ein chronologisches Ablaufbild zur schematischen Darstellung erzeugter Nachrichten bei einer Aktivierung der zentralisierte Ansagefunktion; und
- Figur 3A bis 3C:: Rufmodelle für eine zentralisierte Ansagefunktion in jeweils unterschiedlichen Phasen.

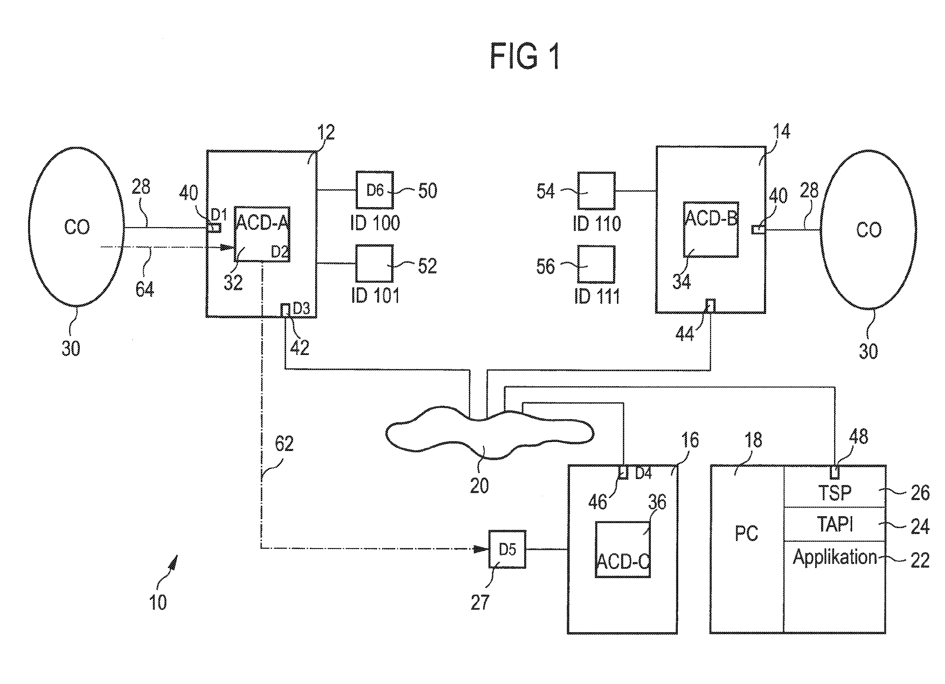

Figur 1 zeigt ein Kommunikationssystem 10, das drei Kommunikationseinrichtungen 12,14,16 - z.B. Kommunikationsanlagen -, eine Datenverarbeitungsanlage 18 und ein lokales Datenübertragungsnetz 20 umfaßt. Das Datenübertragungsnetz 20 ist beispielsweise ein paketorientiertes Datenübertragungsnetz, das die Kommunikationseinrichtungen 12,14,16 untereinander und jeweils mit der Datenverarbeitungsanlage 18 verbindet. Die in der Zeichnung oben angeordneten Kommunikationseinrichtungen 12,14 sind über eine Anschlusseinheit 40 und eine Leitung 28 mit einer - nicht dargestellten - Kommunikationseinrichtung eines weiteren Kommunikationssystems 30 verbunden. Das Kommunikationssystem 30 ist ein gegenüber dem Kommunikationssystem 10 externes System oder ein funktionell abgegliederte Subsystem des Kommunikationssystems 30.

Die Kommunikationseinrichtungen 12,14,16 weisen jeweils automatische Anrufverteilungsfunktionen in sogenannten Gruppenprogrammen 32,34,36 auf, die gemäß den ACD-Funktionen ("Automatic Call Distribution") des ECMA-Standard ECMA-269 arbeiten und in der Zeichnung mit ACD-A, ACD-C, ACD-C bezeichnet sind.

Die Datenverarbeitungsanlage 18 ist in Form eines Personalcomputers (PC) realisiert, der eine - nicht dargestellte - Speichereinheit und einen - nicht dargestellten - zentralen Prozessor enthält. In der Speichereinheit ist ein Anwendungsprogramm 22 gespeichert, das unter anderem Funktionen für eine Rufverteilung sowie für eine Überwachung der im Kommunikationssystem 10 ausgetauschten Nachrichten enthält. Das Anwendungsprogramm 22 kommuniziert über eine TAPI-Softwareschnittstelle 24 (Telecommunication Application Programming Interface) mit einem TSP-Programm 26 (TAPI Service Provider). Durch das TSP-Programm 26 wird eine bidirektionale Umsetzung von TAPI-Befehlen und CSTA-Befehlen (Computer Supported Telecommunication Applications) ausgeführt. Auf Basis dieser CSTA-Befehle kommunizieren die Kommunikationseinheiten 10,12,14,16 sowie die Datenverarbeitungsanlage 18 untereinander über das Datenübertragungsnetz 20.

Zur Bezeichnung von physikalischen oder funktionalen Kategorien, sogenannten "Devices", werden Kennzeichen D1 bis D6 ("Device") verwendet, die einerseits der Bezugnahme auf die jeweilige Einheit dienen, andererseits als Identifikationsnummern für eine softwaretechnische Realisierung Verwendung finden. Der Anschlusseinheit 40 zum Anschluss der Leitung 28 an die Kommunikationseinrichtung 12 ist ein Kennzeichen D1 zugeordnet, dem Gruppenprogramm 32 dieser Kommunikationseinrichtung 12 das Kennzeichen D2. Einer Schnittstelle 42 dieser Kommunikationseinrichtung 32 zum Datenübertragungsnetz 20 ist die Kennziffer D3 zugeordnet, die Schnittstelle 46 der Kommunikationseinrichtung 16 zum Datenübertragungsnetz 20 besitzt das Kennzeichen D4. Eine der Kommunikationseinrichtung 16 zugeordnete, zentrale Ansageeinheit 27 besitzt das Kennzeichen D5. Einem an die Kommunikationseinrichtung 12 angeschlossenen Endgerät 50 ist das Kennzeichen D6 zugeordnet.

In einer weiteren - nicht dargestellten Ausführungsform der Erfindung - ist eine Realisierung der zentralen Ansageeinheit 27 als Softwaremodul möglich, das sich beispielsweise in der Speichereinheit der Datenverarbeitungsanlage 18 befindet.

An den Kommunikationseinrichtungen 12,14 sind eine Vielzahl von Endgeräten 50,52,54,56 angeschlossen, von denen für beide Kommunikationseinrichtungen 12,14 jeweils zwei Endgeräte 50,52;54,56 dargestellt sind. Die an die Kommunikationseinrichtung 12 angeschlossenen Endgeräte 50,52 sind durch eine gemeinsame Sammelrufnummer erreichbar, d.h. eingehende Rufe werden nach - nicht näher erläuterten - Kriterien durch die Rufverteilungsfunktion des Anwendungsprogramms 22 auf eines der Endgeräte 50,52,54,56 weitergeleitet.

Ein Teilnehmer kann sich durch Eingabe einer individuellen Identifikationsnummer ID an einem beliebigen Endgerät anmelden. Ein angemeldeter Teilnehmer wird somit in die automatische Rufverteilung einbezogen, indem Rufe auf das Endgerät durchgestellt werden, an dem er angemeldet ist. Der am Endgerät 50 angemeldete Teilnehmer benutzt eine Identifikationsnummer ID mit dem Wert "100", der am Endgerät 52 angemeldete Teilnehmer eine Identifikationsnummer ID mit dem Wert "101", der am Endgerät 54 angemeldete Teilnehmer eine Identifikationsnummer ID mit dem Wert "110" und schließlich der am Endgerät 56 angemeldete Teilnehmer eine Identifikationsnummer ID mit dem Wert "111".

Ein - in der Zeichnung mit einem strichpunktierten Pfeil dargestellter - an der Kommunikationseinrichtung 12 eintreffender Ruf 64 wird von der Anrufverteilungsfunktion des Gruppenprogramms 32 bei Nichtverfügbarkeit eines am Endgerät 50 mit der Identifikationsnummer ID 100 angemeldeten gerufenen Teilnehmers an die zentrale Ansageneinheit 27 mit dem Kennzeichen D5 weitergeleitet. In der Zeichnung ist diese Weiterleitung 62 mit einem strichpunktierten Pfeil dargestellt.

Die Telekommunikationseinheiten 12,14,16,18 sowie die Datenverarbeitungsanlage 18 kommunizieren untereinander mit Nachrichten nach dem CSTA-Standard, die beispielsweise über ein IP-basiertes ("Internet Protocol") Übertragungsprotokoll über das lokale Datenübertragungsnetz 20 ausgetauscht werden. Diese Nachrichten sind gemäß des ECMA-Standard ECMA-269, 4. Ausgabe, Juni 2000, Abschnitt 11 ("Template Descriptions") in funktionsaufrufende Dienste ("Services") und Ereignisse ("Events") gegliedert, die jeweils über kennzeichnende Argumente ("Parameters") verfügen.

Zur Steuerung der Vermittlungstechnik werden insbesondere die "Call Control" Ereignisnachrichten sowie die zugehörigen Dienstnachrichten eingesetzt, die ECMA-Standard ECMA-269, 4. Ausgabe, Juni 2000, Abschnitt 17 ("Call Control Services & Events") beschrieben sind. Zur Steuerung der Agentenzustände werden die "Logical Device Features" Ereignisnachrichten sowie die zugehörigen Dienstnachrichten des genannten Standards in Abschnitt 22 ("Logical Device Features") eingesetzt. Die Steuerung von Ansagen erfolgt mit Hilfe von "Voice Unit Ereignisnachrichten sowie zugehörigen Dienstnachrichten gemäß Abschnitt 26 ("Voice Unit Services & Events ") des genannten Standards.

Im folgenden wird unter weiterer Bezugnahme auf die Funktionseinheiten der Fig. 1 ein Austausch von CSTA-Nachrichten zur Realisierung des erfindungsgemäßen Verfahrens näher erläutert.

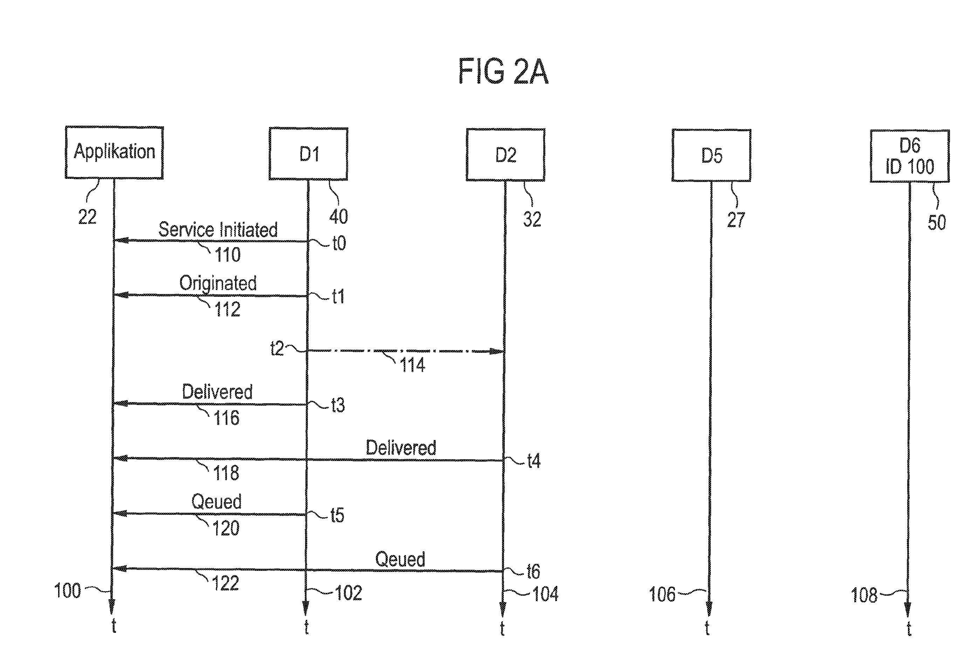

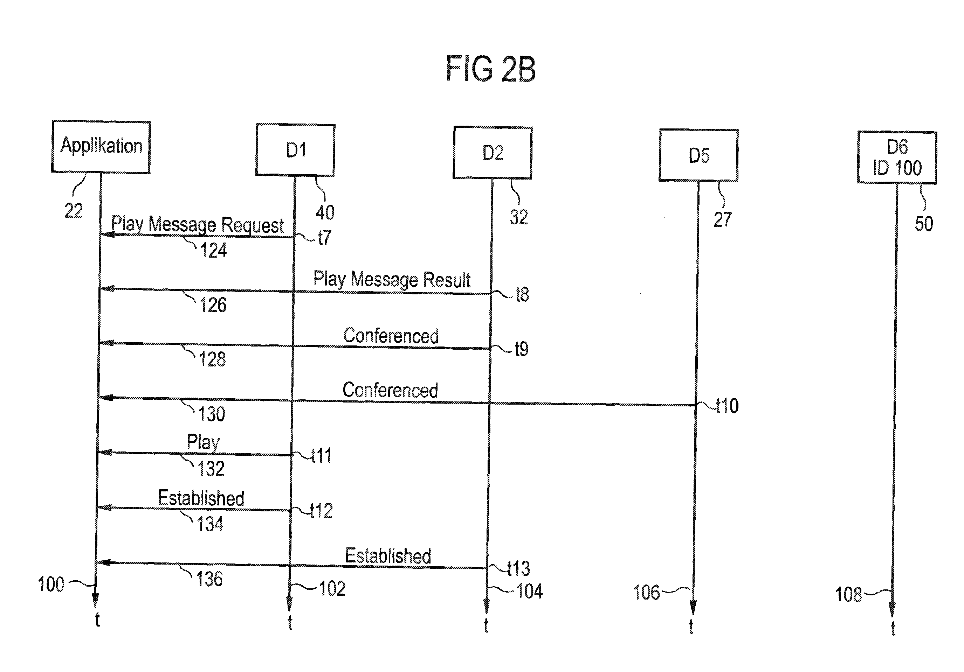

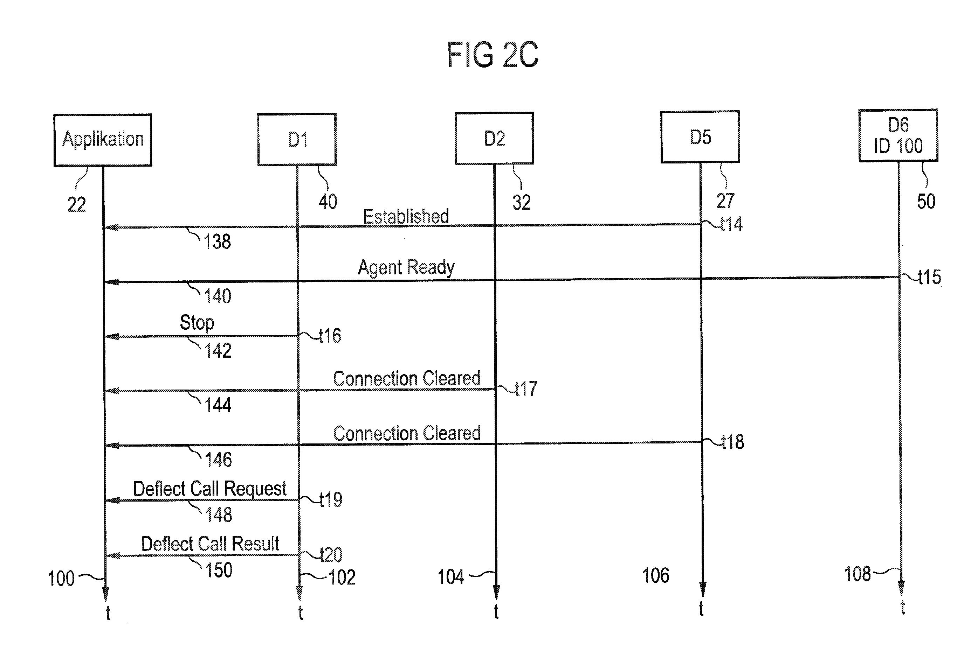

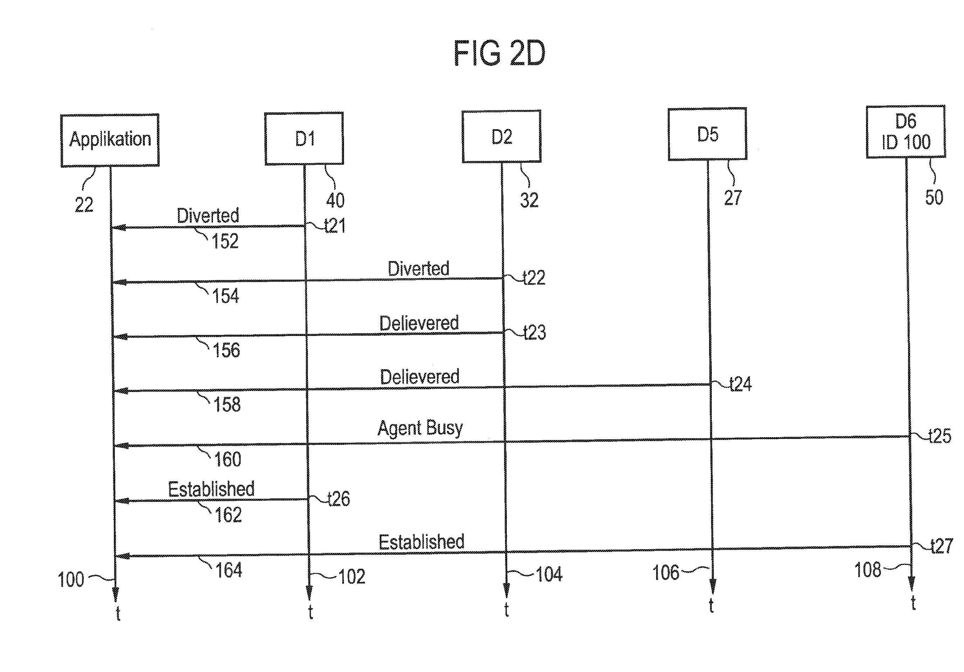

Die Figuren 2A, 2B, 2B und 2D zeigen Nachrichten, die beim automatischen Vermitteln eines ankommenden Rufs zwischen dem Anwendungsprogramm 22 und den Einheiten 40,32,27,50 mit den Kennzeichen D1, D2, D5 und D6 ausgetauscht werden. Zeitstrahlen 100, 102, 104, 106 und 108 sind in dieser Reihenfolge dem Anwendungsprogramm 22 und den Einheiten 40,32,27,50 mit den Kennzeichen D1, D2, D5 und D6 zugeordnet. Die Zeitstrahlen 100 bis 108 verlaufen von oben nach unten, so dass spätere Zeitpunkte weiter unten liegen als frühere Zeitpunkte.

Es sei davon ausgegangen, dass sich ein Teilnehmer an dem Endgerät 50 mit der Kennzahl D6 angemeldet hat, wobei er seine Identifikationsnummer ID mit dem Wert "100" im Zuge des Anmeldungsprozesses eingegeben hat. Dieser Anmeldungsprozess geht einher mit der Generierung eines Agenten, die vom Rufverteilungssystem mit dem Ereignis "Agent Log In" quittiert wird, das die folgenden Parameter enthält:
- agentDevice D6,
- agentID 100,
- acdGroup A.

Durch diesen Anmeldungsprozess wird das Endgerät 50 in die Rufverteilung mit einbezogen.

Vor dem Eintreffen des Rufes 64 wurden die Anschlusseinheit 40, das Gruppenprogramm 32 und das Endgerät 44 in eine - in der Fachwelt oftmals als "Monitoring" bezeichnete und in der Zeichnung nicht dargestellte - Überwachungsfunktion durch das Anwendungsprogramm 22 einbezogen. Dazu wird die im genannten ECMA-Standard, Abschnitt 15 ("Monitoring Services") beschriebene CSTA-Nachricht "Monitor Start" verwendet. Aufgrund der mit dem Dienst "Monitor Start" eingeleiteten Überwachungsfunktion kann das Anwendungsprogramm 22 die Vorgänge in den in die Überwachung einbezogenen Telekommunikationseinheiten ("Devices"), also der Anschlusseinheit 40, dem Gruppenprogramm 32, dem Ansagemodul 27 sowie dem Endgerät 50, verfolgen. Überwachte Ereignisnachrichten werden daher als Pfeile dargestellt, die von einem der vorgenannten Telekommunikationseinheiten zum Anwendungsprogramm 22 führen.

Im folgenden werden diese mit einer zentralen Ansagesteuerung einhergehenden Ereignisnachrichten anhand der Zeichnung und mit Beschreibung ihrer CSTA-Nachrichtenstruktur in chronologischer Reihenfolge erläutert.

Die Anschlusseinheit 40 erzeugt zum Zeitpunkt t0 aufgrund des - vor dem Zeitpunkt t0 - ankommenden Rufes 64 eine Ereignisnachricht 110, die standardgemäß als "Service Initiated"-Nachricht bezeichnet wird und u.a. die folgenden Parameter enthält:
- initiatedConnection D1C1,
- intiatingDevice D1,
- localConnectionInfo Initiated,
- cause new Call,
- callLinkageData G1, T1.
wobei das Kennzeichen D1 mit den oben an Hand der Figur 1 erläuterten Kennzeichen übereinstimmt und C1 einen logischen Verbindungsweg - in der Fachwelt auch mit "Connection" bezeichnet - der noch aufzubauenden Verbindung zwischen dem mit der Kennzeichen D1 bezeichneten Anschlusseinheit 40 und einem im folgenden zu bestimmenden Kommunikationspartner bezeichnet. Das Kürzel G1 bezeichnet ein globales Kennzeichen und das Kürzel T1 ein Thread-Kennzeichen. Globale Kennzeichen und Thread-Kennzeichen sind in einem anderen Zusammenhang im CSTA-Standard, Ausgabe 2000, näher erläutert. Dort sind auch weitere Erklärungen zur Semantik der Parameter zu finden, deren Darstellung diesen Rahmen sprengen würde.

Zu einem folgenden Zeitpunkt t1 erzeugt die Anschlusseinheit 40 eine Ereignisnachricht 112, die gemäß CSTA-Standard als "Originated"-Nachricht bezeichnet wird und deren Funktion die Anzeige eines abgeschlossenen Wahlvorgangs durch den eingehenden Ruf 64 ist. Sie enthält u.a. die folgenden Parameter:
- originatedConnection D1C1,
- callingDevice D1,
- calledDevice D2,
- localConnectionInfo Connected,
- cause new Call,
- associatedCallingDevice D2,
- callLinkageData G1, T1.

Zu einem Zeitpunkt t2 sendet die Anschlusseinheit 40 eine - strichpunktiert dargestellte - kommunikationseinrichtungsinterne Setup-Nachricht 114 an das Gruppenprogramm 32, um eine Verbindung zwischen der Anschlusseinheit 40 und dem zugehörigen Gruppenprogramm 32 herzustellen.

Zu einem Zeitpunkt t3 sendet die Anschlusseinheit 40 aufgrund der zuvor übertragenen Setup-Nachricht 114 eine Ereignisnachricht 116, die gemäß CSTA-Standard als "Delivered"-Nachricht bezeichnet wird und die die Zuteilung des Anrufes zu einem Ziel-Device - in diesem Fall das Gruppenprogramm 32 mit dem Kennzeichen D2 - anzeigt. Sie enthält u.a. die folgenden Parameter:
- connection D2C1,
- alertingDevice D2,
- callingDevice D1,
- calledDevice D2,
- originatingNIDConnection D1C1,
- localConnectionInfo Connected,
- cause Entering Distribution,
- associatedCallingDevice D1,
- callLinkageData G1, T1.

Auch das Gruppenprogramm 32 sendet aufgrund der empfangenen Setup-Nachricht 114 zu einem Zeitpunkt t4 an das Anwendungsprogramm 22 eine CSTA-Nachricht 118, die gemäß CSTA-Standard als "Delivered"-Nachricht bezeichnet wird und u.a. die folgenden Parameter enthält:
- connection D2C1,
- alertingDevice D2,
- callingDevice D1,
- calledDevice D2,
- originatingNIDConnection D1C1,
- localConnectionInfo Alerting,
- cause Entering Distribution,
- associatedCallingDevice D1,
- callLinkageData G1, T1.

Die Anschlusseinheit 40 reiht den ankommenden Ruf 64 zunächst in eine Bearbeitungsschlange ein. Nach dem Einreihen der Rufanforderung in die Bearbeitungsschlange wird zu einem Zeitpunkt t5 eine Ereignisnachricht 120 an das Anwendungsprogramm 22 gesendet, die gemäß CSTA-Standard auch als "Queued"-Nachricht bezeichnet wird und die eine Einreihung in eine Warteschlange anzeigt. Sie enthält u.a. die folgenden Parameter:
- queuedConnection D2C1,
- callingDevice D1,
- calledDevice D2,
- localConnectionInfo Connected,
- cause No Available Agents,
- associatedCallingDevice D1,
- callLinkageData G1, T1.

Das Gruppenprogramm 32 reiht die ankommende Rufanforderung ebenfalls in seine Bearbeitungsschlange ein und sendet seinerseits - zu einem Zeitpunkt t6 - eine "Queued"-Nachricht 122 an das Anwendungsprogramm 22, die u.a. die folgenden Parameter enthält:
- queuedConnection D2C1,
- callingDevice D1,
- calledDevice D2,
- localConnectionInfo Queued,
- cause No Available Agents,
- associatedCallingDevice D1,
- callLinkageData G1, T1.

Die mit dem Argument "cause" übermittelte Ursache für die Einreihung in eine Warteschlange ist die Nichtverfügbarkeit ("No Available Agents") eines dem Endgerät 50 mit der Kennziffer D6 zugeordneten Agenten. Diese Nichtverfügbarkeit kann beispielsweise daraus resultieren, dass der - eingangs als angemeldet angenommene - Teilnehmer an diesem Endgerät 50 gerade keinen Ruf entgegennehmen kann, beispielsweise aus dem Grund, da er sich gerade in einem Gespräch befindet ist.

Es ergibt sich die Notwendigkeit, den rufenden Teilnehmer - präziser, den eingehenden Ruf 64 initiierenden Teilnehmer - mit einer Ansage auf die Nichtverfügbarkeit des gerufenen am Endgerät D6 angemeldeten Teilnehmers aufmerksam zu machen. Hierzu werden im folgenden beteiligte CSTA-Nachrichten beschrieben, die den Aufbau eines Verbindungsweges zum zentralen Ansagemodul 27 begleiten.

Zu einem Zeitpunkt t7 veranlasst die Anschlusseinheit 40 eine Anforderung des zentralen Ansagemoduls 27. Dieses Ansagemodul 27 wird in der Sprechweise des ECMA-Standards auch mit dem Kürzel VRU ("Voice Response Unit") bezeichnet. Die zugehörige "Play Message Request"-Anforderungsnachricht 124 an das Anwendungsprogramm 22, enthält u.a. die folgenden Parameter:
- messageToBePlayed D5,
- overConnection D1C1.

Diese Anforderungsnachricht 124 wird zum Zeitpunkt t8 mit einer positiven Bestätigungsnachricht 126 "Play Message Result" vom Gruppenprogramm 32 quittiert.

Im folgenden wird vom Gruppenprogramm 32, vergleichbar mit einer Konferenzschaltung ein Verbindungsweg - der in den Parametern der vorausgehenden Ereignisnachrichten mit C1 bezeichnet wurde - zwischen der Anschlusseinheit 40 mit dem Kennzeichen D1 und der Schnittstelle 42 mit dem Kennzeichen D3 aufgebaut wobei die Verbindung zum Gruppenprogramm 32 aufgrund des nichtverfügbaren, das Endgerät 50 mit dem Kennzeichen D6 repräsentierenden Agenten im Wartezustand ("queued") gehalten wird. Die Schnittstelle 42 mit dem kennzeichen D3 der Kommunikationseinrichtung 12 ist über das lokale Datenübertragungsnetz 20 unter anderem mit der Schnittstelle 46 mit dem Kennzeichen D4 der Kommunikationseinrichtung 16 verbunden. Von dieser Schnittstelle 46 aus wird mit einer weiteren vom zu der Kommunikationseinrichtung 16 gehörigen Gruppenprogramm 36 veranlassten Konferenzschaltung ein Verbindungsweg (in den unten folgenden Ereignisnachrichten mit "C2" bezeichnet) zu der zentralen Ansageeinheit 27 aufgebaut. Diese beiden Konferenzschaltungen werden durch die beiden folgenden Ereignisnachrichten an das Anwendungsprogramm 22 im Rahmen der Überwachungsfunktion gemeldet.

Zu einem Zeitpunkt t9 sendet das Gruppenprogramm 32 aufgrund eines hergestellten Verbindungsweges C1 eine Ereignisnachricht 128, die gemäß CSTA-Standard als "Conferenced"-Nachricht bezeichnet wird und die dem Anwendungsprogramm 22 anzeigt, dass in die bestehende, wartende Verbindung eine weitere Verbindung zu der zentralen Ansageeinheit 27 mit dem Kennzeichen D5 einbezogen wurde. Sie enthält u.a. die folgenden Parameter:
- primaryOldCall D2C1,
- confController D2,
- addedParty D5,
- newConnection D1C1,
- oldConnection D1C1,
- deviceID D1,
- newConnection D2C1,
- oldConnection D2C1,
- deviceID D2,
- newConnection D3C1,
- deviceID D5,
- localConnectionInfo Queued,
- cause Single Step Conference,
- newCallLinkageData G1,T1,
- oldCallLinkageData G1,T1.

Zu einem Zeitpunkt t10 sendet das Gruppenprogramm 36 aufgrund eines hergestellten Verbindungsweges C2 eine Ereignisnachricht 130, die gemäß CSTA-Standard als "Conferenced"-Nachricht bezeichnet wird. Dem Anwendungsprogramm 22 wird mit dieser Nachricht 130 mitgeteilt, dass die Verbindnung zur zentralen Ansageeinheit 27 hergestellt wurde und gleichzeitig der Ruf noch in der Warteschlange ist. Diese Nachricht 130 enthält u.a. die folgenden Parameter:
- primaryOldCall D4C2,
- confController D2,
- addedParty D5,
- newConnection D4C2,
- oldConnection D4C2,
- deviceID D1,
- newConnection D4C2,
- oldConnection D4C2,
- deviceID D2,
- newConnection D5C2,
- deviceID D5,
- localConnectionInfo Queued,
- cause Single Step Conference,
- newCallLinkageData G1,T1,
- oldCallLinkageData G1,T1.

Die zentrale Ansageeinheit 27 veranlasst daraufhin die Einspielung der Ansage. Dieses Ereignis wird zu einem Zeitpunkt t11 durch eine Ereignisnachricht 132 gemeldet, die gemäß CSTA-Standard als "Play"-Nachricht bezeichnet wird und u.a. die folgenden Parameter enthält:
- message D5,
- connection D1C1.

Weiterhin melden in den folgenden drei Nachrichten die überwachte Anschlusseinheit 40, die überwachte Schnittstelle 42 sowie die zentrale Ansageeinheit 27 den erfolgreichen Aufbau der Verbindung von der Anschlusseinheit 40 bis zur zentralen Ansageeinheit 27.

Zu einem Zeitpunkt t12 sendet die Anschlusseinheit 40 eine Ereignisnachricht 134, die gemäß CSTA-Standard als "Established"-Nachricht bezeichnet wird und die dem Anwendungsprogramm 22 anzeigt, dass jetzt die Verbindung geschaltet ist. Die Nachricht 134 enthält u.a. die folgenden Parameter:
- EstablishedConnection D3C1,
- answeringDevice D5,
- callingDevice D1,
- calledDevice D2,
- originatingNIDConnection D1C1,
- localConnectionInfo Connected,
- cause Remains in Queue,
- associatedCallingDevice D1,
- callLinkageData G1, T1.

Zu einem Zeitpunkt t13 sendet das Gruppenprogramm 32 eine Ereignisnachricht 136, die gemäß CSTA-Standard als "Established"-Nachricht bezeichnet wird und die mit der Ereignisnachricht 134 identische Parameter enthält.

Zu einem Zeitpunkt t14 sendet die zentrale Ansageeinheit 27 eine Ereignisnachricht 138, die gemäß CSTA-Standard als "Established"-Nachricht bezeichnet wird und die mit der Ereignisnachricht 134 identische Parameter enthält.

Im folgenden wird davon ausgegangen, dass der dem Teilnehmer mit der Identifikationsnummer ID 100 zugeordnete Agent "freigestellt" wird. Unter einer Freistellung dieses Agenten ist zu verstehen, dass der Teilnehmer, den dieser Agent repräsentiert, an seinem ihm durch Anmeldung mit seiner Identifikationsnummer ID 100 zugeordneten Endgerät 50 mit der Kennzahl D6 wieder für eingehende Rufe erreichbar ist, weil er beispielsweise ein Gespräch beendet hat. Zu einem Zeitpunkt t15 signalisiert das Endgerät 50 unter Einbeziehung des Gruppenprogramms 32 dem Anwendungsprogramm 22 mit einer Ereignisnachricht 140, die gemäß CSTA-Standard als "Agent Ready"-Nachricht bezeichnet wird, dass es zur Annahme weiterer Rufe im Rahmen der Rufverteilung bereit ist. Diese Ereignisnachricht enthält u.a. die folgenden Parameter:
- agentDevice D6,
- agentGroup ACD Group,
- agentID 100.

Das Freisetzen des Agenten setzt nun Aktivitäten in Gang, die zu einem Anhalten der Ansagefunktion und zu einer erneuten Umleitung des Verbindungsweges führen. Der Verbindungsweg ausgehend von dem den eingehenden Ruf 64 initiierenden Teilnehmer wird von dem vorübergehenden Ziel - der zentralen Ansageeinheit 27 - hin zu dem jetzt gerufenen Teilnehmer am Endgerät 50 mit der Kennzahl D6 umgestellt.

Hierzu sendet die Anschlusseinheit 40 zu einem Zeitpunkt t16 eine Ereignisnachricht 142, die gemäß CSTA-Standard als "Stop"-Nachricht bezeichnet wird und u.a. die folgenden Parameter enthält:
- message D5,
- agentGroup D1C1.

Diese Nachricht meldet das Anhalten der Ansagefunktion durch die zentrale Ansageeinheit 27.

Zu einem Zeitpunkt t17 sendet das Gruppenprogramm 32 eine Ereignisnachricht 144, die eine Beendigung der Verbindung signalisiert und die gemäß CSTA-Standard als "Connection Cleared"-Nachricht bezeichnet wird, und dem Anwendungsprogramm 22 anzeigt, dass die Verbindung zu der Schnittstelle 42 mit dem kennzeichen D3 gelöst wurde. Diese Ereignisnachricht 144 enthält u.a. die folgenden Parameter:
- droppedConnection D3C1,
- releasingDevice D3,
- localConnectionInfo Queued,
- cause normal Clearing,
- callLinkageData G1, T1.

Zu einem Zeitpunkt t18 sendet die Ansageeinheit 27 eine Ereignisnachricht 144, die eine Beendigung der Verbindung signalisiert und die gemäß CSTA-Standard als "Connection Cleared"-Nachricht bezeichnet wird. Diese Ereignisnachricht 146 enthält u.a. die folgenden Parameter:
- droppedConnection D3C1,
- releasingDevice D3,
- localConnectionInfo Queued,
- cause normal Clearing,
- callLinkageData G1, T1.

Zu einem Zeitpunkt t19 sendet die Anschlusseinheit 40 eine Anforderungsnachricht 148, die gemäß CSTA-Standard als "Deflect Call Request"-Nachricht bezeichnet wird und u.a. die folgenden Parameter enthält:
- callToBeDiverted D2C1,
- newDestination D6.

Diese Nachricht leitet die Veranlassung einer Umleitung auf das Endgerät 50 mit der Kennzahl D6 ein.

Zu einem Zeitpunkt t20 bestätigt die Anschlusseinheit 40 den Empfang der CSTA-Nachricht 148 mit einer CSTA-Nachricht 150, die an das Anwendungsprogramm 22 gesendet wird. Diese CSTA-Nachricht 150 wird gemäß CSTA-Standard auch als "Deflect Call Result"-Nachricht bezeichnet und enthält keine Parameter.

Zu einem Zeitpunkt t21 sendet die Anschlusseinheit 40 eine Ereignisnachricht 152 an das Anwendungsprogramm 22, die gemäß CSTA-Standard auch als "Diverted"-Nachricht bezeichnet wird und die dem Anwendungsprogramm 22 eine Weitergabe eines logischen Devices an einen Agenten anzeigt. Die Nachricht 152 enthält u.a. die folgenden Parameter:
- connection D2C1,
- divertingDevice D2,
- newDestination D6,
- localConnectionInfo Null,
- cause distributed,
- associatedCallingDevice D1,
- callLinkageData G1,T1.

Die Programmgruppe 32 sendet zu einem Zeitpunkt t22 ebenfalls eine Ereignisnachricht 154 an das Anwendungsprogramm 22. Die Ereignisnachricht 154 wird gemäß CSTA-Standard auch als "Diverted Event"-Nachricht bezeichnet und enthält dieselben Parameter wie die Nachricht 152.

Zu einem Zeitpunkt t23 sendet das Gruppenprogramm 32 an das Anwendungsprogramm 22 eine Ereignisnachricht 156, die auch als "Delivered"-Nachricht bezeichnet wird, und die dem Anwendungsprogramm 22 anzeigt, dass am Endgerät 50 mit dem Kennzeichen D6 eine Signalisierung stattfindet. Die Nachricht 156 enthält u.a. die folgenden Parameter:
- Connection D6C1,
- alertingDevice D6,
- callingDevice D1,
- calledDevice D2,
- lastRedirectionDevice D2,
- localConnectionInfo Alerting,
- cause Distributed,
- associatedCallingDevice D4,
- callLinkageData G1, T1.

Zu einem Zeitpunkt t24 sendet die Ansageeinheit 27 an das Anwendungsprogramm 22 eine Ereignisnachricht 158, die auch als "Delivered"-Nachricht bezeichnet wird und u.a. die folgenden Parameter enthält:
- Connection D6C1,
- alertingDevice D6,
- callingDevice D1,
- calledDevice D2,
- lastRedirectionDevice D2,
- localConnectionInfo Alerting,
- cause Distributed,
- associatedCallingDevice D5,
- callLinkageData G1, T1.

Durch die CSTA-Nachricht 158 bestätigt die Ansageeinheit 27 die erfolgreiche Rufweiterleitung. Zu diesem Zeitpunkt signalisiert das Endgerät 50 einen eingehenden Verbindungswunsch durch den eingehenden Ruf 64.

Zu einem Zeitpunkt t25 sendet das Endgerät 50 Ereignisnachricht 160 an das Anwendungsprogramm 22, die auch als "Agent Busy"-Nachricht bezeichnet wird und u.a. die folgenden Parameter enthält:
- agentDevice D6,
- agentGroup ACD-A,
- AgentID 120.

Mit Hilfe der CSTA-Nachricht 160 wird das Anwendungsprogramm 22 darüber unterrichtet, dass das Endgerät 50 im Rahmen der Rufverteilung nicht weiter nutzbar ist. Die Ursache hierfür liegt darin, dass der Teilnehmer an diesem Endgerät den eingehenden Ruf 64 entgegengenommen hat

Zu einem Zeitpunkt t26 erzeugt die Anschlusseinheit 40 für das Anwendungsprogramm 22 eine Ereignisnachricht 162, die auch als "Established"-Nachricht bezeichnet wird und die dem Anwendungsprogramm 22 eine Meldung eines Agenten anzeigt. Diese Nachricht 162 enthält u.a. die folgenden Parameter:
- establishedConnection D6C1,
- answeringDevice D6,
- callingDevice D1,
- calledDevice D2,
- lastRedirectionDevice D2,
- localConnectionInfo Connected,
- cause Distributed,
- associatedCallingDevice D1,
- callLinkageData G1, T1.

Durch die CSTA-Nachricht 162 wird dem Anwendungsprogramm 22 angezeigt, dass die Rufverteilung durchgeführt worden ist.

Das Endgerät 50 erzeugt zu einem Zeitpunkt t27 für das Anwendungsprogramm 22 eine Ereignisnachricht 164, die gemäß CSTA-Standard als EstablishedEvent-Nachricht bezeichnet wird und u.a. die folgenden Parameter enthält:
- establishedConnection D6C1,
- answeringDevice D6,
- callingDevice D1,
- calledDevice D2,
- lastRedirectionDevice D2,
- localConnectionInfo Connected,
- cause Distributed,
- associatedCallingDevice D1,
- callLinkageData G1, T1.

Durch die CSTA-Nachricht 164 wird die erfolgreiche Rufverteilung auch seitens des Endgerätes 50 bestätigt.

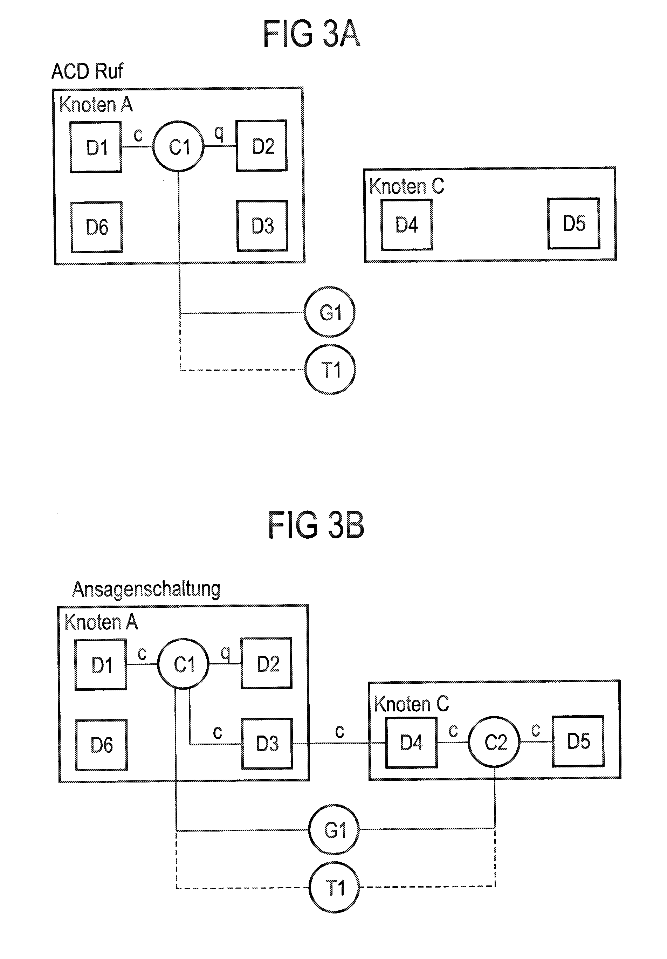

Figur 3A zeigt ein CSTA-Modell des Anwendungsprogramms 22 zum Zeitpunkt t6. Die Einheiten mit dem Kennzeichen D1, D2, D3 und D6 sind der Kommunikationseinrichtung 12 zugeordnet, die im Modell das Kennzeichen "Knoten A" besitzt. Zwischen der Einheit mit dem Kennzeichen D1 und der Einheit mit dem Kennzeichen D2 wurde ein Ruf mit dem logischen Verbindungsweg C1 ("Connection 1") aufgebaut. Der Verbindungszustand zur Seite des Endgerätes mit dem Kennzeichen D1 hin ist "verbunden", siehe Kleinbuchstabe c ("connected"). Der Zustand des Rufes zur Seite des Endgerätes mit dem Kennzeichen D2 ist "eingereiht", siehe Kleinbuchstabe q ("queued"). Außerdem ist mit dem logischen Verbindungsweg C1 das globale Kennzeichen G1 verknüpft, das für die Rufweiterleitung verwendet wird, um zwei Rufe in verschiedenen Kommunikationseinrichtungen 12 und 16 miteinander zu verknüpfen. Ein Thread-Kennzeichen T1 ist ebenfalls dem Kennzeichen C1 zugeordnet, um den zur Rufweiterleitung dienenden Anwendungsprozess auf dem Rechner 18 zu kennzeichnen. Das globale Kennzeichen G1 und das Thread-Kennzeichen T1 werden, wie bereits erwähnt, in anderem Zusammenhang im CSTA-Standard, Ausgabe 2000, näher erläutert.

Die Einheiten mit den Kennzeichen D4 und D5 sind der Kommunikationseinrichtung 16 zugeordnet. Die Kommunikationseinrichtung 16 hat im Modell das Kennzeichen "Knoten C".

Figur 3B zeigt das Rufmodell des Anwendungsprogramms 22 zum Zeitpunkt t14. Der logische Verbindungsweg C1 ist weiterhin mit dem Kennzeichen D2 wartend verbunden ("queued") und dem Kennzeichen D1 verbunden ("connected"). Der logische Verbindungsweg C1 ist außerdem mit dem Kennzeichen D3 verbunden, siehe Kleinbuchstabe c ("connected"). Das globale Kennzeichen G1 ist weiterhin mit dem logischen Verbindungsweg C1 verknüpft. Ebenso ist das Thread-Kennzeichen T1 weiterhin mit dem logischen Verbindungsweg C1 verknüpft.

Bezüglich der Kommunikationseinrichtung 16 gibt es, wie bereits erwähnt, in dem Modell des Anwendungsprogramms 22 die Kennzeichen D4 und D5. Beide Kennzeichen sind durch einen logischen Verbindungsweg C2 für einen Ruf verknüpft, der die Schnittstelle 46 mit der Ansageeinheit 27 verbindet. Zur Seite des Kennzeichens D3 hin besteht eine Verbindung, siehe c ("connected"). Zwischen dem einen logischen Verbindungsweg C2 und dem Kennzeichen D6 besteht ebenfalls eine Verbindung, siehe c ("connected").

Das globale Kennzeichen G1 ist auch mit dem Rufkennzeichen C2 verbunden. Ebenso ist das Thread-Kennzeichen T1 mit dem Rufkennzeichen C2 verbunden.

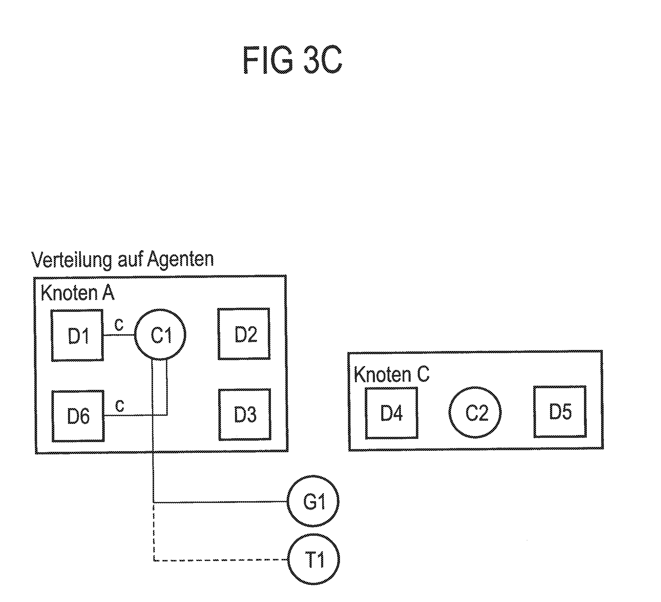

Figur 3C zeigt das Rufmodell des Anwendungsprogramms 22 zum Zeitpunkt t27. Der logische Verbindungsweg C1 jetzt mit den beiden Kennzeichen D1 und D6 verbunden, siehe c ("connected").

Fällt das Anwendungsprogramm 22, beispielsweise aufgrund einer Störung in der Datenverarbeitungsanlage 18 oder im Datenübertragungsnetz 20 aus, so wird in eine Notfall-Betriebsart umgeschaltet, in welcher die Rufverteilung zunächst durch das Gruppenprogramm 32 übernommen wird. Das Gruppenprogramm 32 versucht den ankommenden Ruf 64 an Endgeräte weiterzuleiten, die an die Kommunikationseinrichtung 12 angeschlossen sind und die zu dieser dem Gruppenprogramm 32 zugeordneten Gruppe gehören. Sind alle an die Kommunikationseinrichtung angeschlossenen Endgeräte der Gruppe besetzt, so wird der ankommende Ruf durch eine interne Anrufbeantwortungsfunktion der Kommunikationseinrichtung 12 entgegengenommen.

## Patentansprüche

1. Verfahren zur Rufbeantwortung in einem aus mehreren Kommunikationseinrichtungen (12,14,16) bestehenden, verteilten Kommunikationssystem (10),
wobei Teilnehmer an den Kommunikationseinrichtungen (12,14,16) des verteilten Kommunikationssystems (10) zugeordneten Kommunikationsendgeräten (50,52,54,56) registrierbar sind, und,
wobei ankommende Rufe (64) nach vorgebbaren Kriterien den Kommunikationsendgeräten (50,52,54,56) zuordenbar sind,
**dadurch gekennzeichnet,**
**dass** bei Nichtverfügbarkeit eines durch den ankommenden Ruf (64) gerufenen registrierten Teilnehmers eine Ansagefunktion ausgeführt wird, durch die eine Aktivierung einer Ansage auf einer zentralen Ansageeinrichtung (27) des verteilten Kommunikationssystems (10) veranlasst wird.

2. Verfahren nach Anspruch 1,
**dadurch gekennzeichnet,**
**dass** die Ansagefunktion durch ein Anwendungsprogramm (22) aktiviert wird.

3. Verfahren nach Anspruch 2,
**dadurch gekennzeichnet,**
**dass** das Anwendungsprogramm (22), die zentrale Ansageeinrichtung (27) sowie die Kommunikationseinrichtungen (12,14,16) untereinander Steuerungs- und/oder Bestätigungsnachrichten austauschen.

4. Verfahren nach Anspruch 3,
**dadurch gekennzeichnet,**
**dass** die Steuerungs- und/oder Bestätigungsnachrichten gemäß des CSTA-Protokolls oder gemäß eines auf dem CSTA-Protokoll aufbauenden Protokolls ausgestaltet sind.

5. Verfahren nach einem der Ansprüche 3 oder 4,
**dadurch gekennzeichnet,**
**dass** die ausgetauschten Steuerungs- und/oder Bestätigungsnachrichten über ein paketorientiertes Netzwerk (20) übertragen werden.

6. Verfahren nach einem der vorhergehenden Ansprüche,
**dadurch gekennzeichnet,**
**dass** die zentrale Ansageeinrichtung (27) in einer Datenverarbeitungsanlage (18) implementiert ist.

7. Verfahren nach einem der vorhergehenden Ansprüche,
**dadurch gekennzeichnet,**
**dass** in mindestens einer dem Kommunikationssystem (10) zugeordneten Datenbank ein Kennzeichen für einen im Kommunikationssytem (10) registrierten Teilnehmer gespeichert wird.

8. Verfahren nach Anspruch 7,
**dadurch gekennzeichnet,**
**dass** die Kennzeichen Rufnummern von Kommunikationsendgeräten (50,52,54,56) und/oder Anmeldungskennzeichen von registrierten Teilnehmern sind.

9. Verteiltes Kommunikationssystem (10) mit mindestens einer Kommunikationseinrichtung (12),
mit mehreren, der Kommunikationseinrichtung (12) des verteilten Kommunikationssystems (10) zugeordneten Kommunikationsendgeräten (50,52) an denen ein Teilnehmer registrierbar ist, wobei ankommende Rufe (64) nach vorgebbaren Kriterien den Kommunikationsendgeräten (50,52) zuordenbar sind,
**gekennzeichnet durch**,
eine Ansagefunktion, die bei Nichtverfügbarkeit eines **durch** den ankommenden Ruf (64) gerufenen registrierten Teilnehmers ausgeführt wird,
wobei **durch** die Ansagefunktion eine Aktivierung einer Ansage auf einer zentralen Ansageeinrichtung (27) des verteilten Kommunikationssystems (10) veranlasst wird.
